# EUROPÄISCHE PATENTANMELDUNG

(11) **EP 2 392 482 A2**
(43) Veröffentlichungstag der Anmeldung: **07.12.2011**
(21) Anmeldenummer: 11167575.7
(22) Anmeldetag: 26.05.2011
(51) Int. Cl.: B60G 21/055, F16C 27/06, F16F 1/38

(54) **Stabilisatoranordnung und Verfahren zu deren Herstellung**

(30) Priorität: 07.06.2010 DE 102010022866
(71) Anmelder: Benteler Automobiltechnik GmbH, 33102 Paderborn (DE)
(72) Erfinder: Härtel, Dr. Wulf, 32549 Bad Oeynhausen (DE); Hammelmaier, Ullrich, 33104 Paderborn (DE); Koczar, Peter, 65205 Wiesbaden (DE)
(74) Vertreter: Ksoll, Peter

(57) **Zusammenfassung**

Die Erfindung betrifft ein Verfahren zum Herstellen einer Stabilisatoranordnung (14) umfassend einen Stabilisatorstab (5) mit einem von einer Lagerschelle (12) umgriffenen Gummilager (1), bei welchem das Gummilager (1) in einem ersten Schritt durch Aufvulkanisieren eines Gummiformteils (2) auf eine Innenseite einer Außenschale (3) hergestellt wird und nach Beschichtung des Stabilisatorstabs (5) in einem Verbindungsbereich (6) auf den Stabilisatorstab (5) aufvulkanisiert wird, wobei das Gummilager (1) während des Aufvulkanisierens auf den Stabilisatorstab (5) mittels eines Vorspannwerkzeuges unter einer definierten Vorspannung gehalten wird. Nach dem Aufvulkanisieren und dem Entfernen des Vorspannwerkzeugs wird das Gummilager (1) unter Einbringung einer definierten Vorspannung mit der Lagerschelle (12) verbunden.

## Beschreibung

Die Erfindung betrifft ein Verfahren zum Herstellen einer Stabilisatoranordnung umfassend einem Stabilisatorstab mit einem von einer Lagerschelle umgriffenen Gummilager gemäß den Merkmalen im Oberbegriff des Patentanspruchs 1 sowie eine Stabilisatoranordnung gemäß den Merkmalen im Oberbegriff von Patentanspruch 5.

Es zählt im Kraftfahrzeugbereich zum Stand der Technik Stabilisatoren mittels Gummilagern, wie beispielsweise Drehstabschulterlagern oder Stabilisatorlagern, an die Fahrzeugkarosserie anzubinden.

Zur Verringerung des Verschleißes und der damit erzielbaren Erhöhung der Lebensdauer ist es weiterhin bekannt, die Gummilager zusätzlich zu postvulkanisieren. Dabei kann durch den Einsatz eines Haftvermittlers eine stoffschlüssige Verbindung zwischen dem Gummilager und beispielsweise dem Stabilisator erzielt werden.

Ein solches Verfahren zur Verbindung eines Gummilagers mit einem Drehstabschulterlager ist beispielsweise durch die DE 199 19 573 A1 offenbart. Hierhin ist beschrieben, dass eine Metallhülse des Drehstabschulterlagers vor dem Montieren des Gummilagers im Verbindungsbereich mit einem Haftvermittler versehen wird. Anschließend erfolgt das Aufschieben des Gummilagers auf die Metallhülse des Drehstabschulterlagers. Das Vorspannen des Gummilagers erfolgt mittels einer Außenhülse. Hierbei ist auch die Außenhülse an ihrer am Gummilager anliegende Innenseite mit einem Haftvermittler versehen. Die gesamte Anordnung aus Metallhülse, Gummilager und Außenhülse wird erwärmt, um das Gummilager zu postvulkanisieren und über den Haftvermittler jeweils eine stoffschlüssige Verbindung zwischen Metallhülse und Gummilager sowie zwischen Gummilager und Außenhülse zu erzeugen.

Nachteilig bei diesem Verfahren ist, dass das Gummilager durch die Außenhülse zwar vor der Postvulkanisation unter einer definierten Vorspannung gehalten wird. Nach der Postvulkanisation stellt sich allerdings aufgrund des Schrumpfens des Gummilagers ein Undefinierter Spannungszustand ein. Das bedeutet, dass sich das Gummilager nach der Postvulkanisation in einem undefinierten Spannungszustand befindet.

Ausgehend von diesem Stand der Technik liegt der Erfindung die Aufgabe zugrunde, ein Verfahren zum Herstellen einer Stabilisatoranordnung umfassend einen Stabilisatorstab mit einem von einer Lagerschelle umgriffenen Gummilager aufzuzeigen, bei welchem eine definierten Vorspannung gewährleistet ist sowie eine Stabilisatoranordnung aufzuzeigen, bei welcher das Gummilager eine definierte Vorspannung aufweist.

Der verfahrensmäßige Teil der Aufgabe wird durch ein Verfahren mit den Maßnahmen von Patentanspruch 1 gelöst.

Die abhängigen Ansprüche betreffen vorteilhafte Ausführungen des Verfahrens gemäß Patentanspruch 1.

Der gegenständliche Teil der Aufgabe wird durch eine Stabilisatoranordnung mit den Merkmalen des vorliegenden Patentanspruchs 5 gelöst.

Die abhängigen Ansprüche betreffen spezifizierte Ausführungsformen von Patenanspruch 5.

Die Erfindung betrifft ein Verfahren zum Herstellen einer Stabilisatoranordnung umfassend einen Stabilisatorstab mit einem von einer Lagerschelle umgriffenen Gummilager, bei welchem das Gummilager in einem ersten Schritt durch Aufvulkanisieren eines Gummiformteils auf eine Innenseite einer Außenschale hergestellt wird und nach Beschichtung eines Stabilisatorstabs in einem Verbindungsbereich auf den Stabilisatorstab aufvulkanisiert wird. Dabei wird das Gummilager während des Aufvulkanisierens auf den Stabilisatorstab mittels eines Vorspannwerkzeugs unter einer definierten Vorspannung gehalten und nach dem Aufvulkanisieren und dem Entfernen des Vorspannwerkzeuges unter Einbringung einer definierten Vorspannung mit einer Lagerschelle verbunden.

Das Aufvulkanisieren des Gummilagers kann hierbei in einem Ofen oder mittels Induktionsheizung erfolgen. Der Vulkanisationsprozess bzw, die für eine Vulkanisation notwendige Erwärmung kann auch mittels einer lokalen Heißluftbeaufschlagung oder einer Erwärmung mittels Infrarotquelle durchgeführt werden.

Das Gummilager kann sowohl aus einem oder mehreren an eine Außenschale anvulkanisierten Gummiformteilen, als auch aus einem an mehrere Außenschalenteile anvulkanisierten Gummiformteil hergestellt werden.

Das zum Vorspannen während des Aufvulkanisierens auf den Stabilisator eingesetzte Vorspannwerkzeug kann einteilig geschlitzt ausgeführt sein. Dabei umgreift das Vorspannwerkzeug das Gummilager. Die den Schlitz begrenzenden Enden des Vorspannwerkzeuges werden so miteinander verbunden, dass sich die gewünschte definierte Vorspannung einstellt. Vorzugsweise liegt das Vorspannwerkzeug mit seiner Innenseite flächig an einer Außenseite des Gummilagers an um eine gleichmäßig über das gesamte Gummilager verteilte Vorspannkraft zu gewährleisten.

Alternativ zur einteiligen Ausführung kann das Vorspannwerkzeug auch zweiteilig ausgeführt sein und aus zwei Werkzeughälften bestehen, welche das Gummilager halbschalenförmig umgreifen. Die definierte Vorspannung wird hierbei gleichzeitig mit dem Verbinden der beiden Lagerschalenhälften in das Gummilager eingebracht.

Die in das Gummilager eingebrachte definierte Vorspannung während des Aufvulkanisierens auf den Stabilisatorstab entspricht nicht der Vorspannung unter welcher das Gummilager nach der Endmontage durch die Lagerschelle gehalten werden soll. Die Vorspannung, die für den Vulkanisationsprozess aufgebracht ist, baut sich während des Vulkanisationsprozesses zumindest teilweise ab. Nach dem Entfernen des Vorspannwerkzeugs ist das Gummilager entspannt.

Das Vorspannwerkzeug kann zudem eine Innenkontur aufweisen, welche an eine Innenkontur der zur Montage vorgesehenen Lagerschelle angepasst ist.

Nachdem Aufvulkanisieren und dem Entfernen des Vorspannwerkzeugs wird die Lagerschelle das Gummilager umfangsseitig umfassend angeordnet. Vorzugsweise liegt die Lagerschelle hierbei mit ihrer Innenseite vollflächig an der Außenseite des Gummilagers an. Gleichzeitig mit Anordnung der Lagerschelle wird eine definierte Vorspannung in das Gummilager eingebrachte Zusätzlich zu der so erzeugten Reibschlussverbindung können Gummilager und Lagerschelle stoffschlüssig miteinander verbunden werden. Dabei wird insbesondere eine Klebeverbindung zwischen Lagerschelle und Gummilager bevorzugt. Die Klebeschicht kann hierzu vor der Montage der Lagerschelle auf die Innenseite der Lagerschelle und/oder auf die Außenseite des Gummilagers aufgebracht werden.

Die erfindungsgemäße Stabilisatoranordnung umfasst wenigstens ein auf einen Stabilisatorstab aufvulkanisiertes Gummilager mit einer das Gummilager umgreifenden Lagerschelle. Dabei besteht das Gummilager aus einem Gummiformteil mit einer aufvulkanisierten Außenschale und wird durch die Lagerschelle unter einer definierten Vorspannung gehalten.

Die Stabilisatoranordnung wird bevorzugt mittels des vorstehend beschriebenen Verfahrens hergestellt.

Die Außenschale liegt mit ihrer Innenseite vorzugsweise vollflächig an der Außenseite des Gummiformteils an. Es kann darüber hinaus aber auch vorgesehen sein, das mehrere Außenschalenteile auf der Außenseite des Gummiformteils angeordnet sind. Dabei können zwischen den beispielsweise halbschalenförmigen Außenschalenteilen Spalte vorgesehen sein.

Denkbar ist außerdem, dass die Außenschale in ihrer Kontur an eine Innenkontur der Lagerschelle angepasst ist oder Ausnehmungen zur Aufnahme von zum Stabilisatorstab gerichteten Vorsprüngen oder Nuten der Lagerschalle aufweist.

Die das Gummiformteil einfassende Außenschale kann aus Metall oder Kunststoff bestehen und an ihrer Außenseite ebenfalls eine Gummibeschichtung aufweisen.

Das Gummilager kann neben einer einstückigen Ausführung auch mehrteilig ausgeführt sein. Beispielsweise ist eine Zusammensetzung des Gummilagers aus zwei Gummilagerhälften denkbar.

Die Lagerschelle umgreift das Gummilager vorzugsweise derart, dass die Innenseite der Lagerschelle zur Erzielung einer gleichmäßigen Vorspannung flächig an der Außenseite des Gummilagers anliegt. Insbesondere ist die Lagerschelle dabei mit ihrer Länge an eine Länge des Gummilagers angepasst. Die in Längsrichtung weisenden Stirnflächen des Gummilagers gelangen bei dieser Ausführung nicht mit der Lagerschelle in Kontakt.

Selbstverständlich kann die Länge der Lagerschelle auch von der Länge des Gummilagers abweichen oder Aussparungen aufweisen, Hierbei wäre auch denkbar, dass die Lagerschelle radial nach innen gebogene Abschnitte aufweist, welche zumindest teilweise an einer oder beiden Stirnseiten des Gummilagers anliegen.

Vorzugsweise ist das Gummilager der Stabilisatoranordnung nicht nur reibschlüssig sondern auch stoffschlüssig mit der Lagerschelle verbunden. Dabei ist diese stoffschlüssige Verbindung insbesondere durch eine Klebeverbindung realisiert.

Der Vorteil des erfindungsgemäßen Verfahrens und der somit herstellbaren Stabilisatoranordnung wird vor allem darin gesehen, dass die Anordnung der Lagerschelle nach der Aufvulkanisation des Gummilagers auf den Stabilisatorstab erfolgt, sodass die von der Lagerschelle eingebrachte Vorspannung in das Gummilager exakt eingestellt und beibehalten werden kann.

Durch das Einbringen einer definierten Vorspannung über die Lagerschelle in das Gummilager können gezielt Relativbewegungen und Noise Vibration Harshness (NHV) Probleme zwischen Lagerschelle und Gummilager vermieden werden, wodurch sich die Lebensdauer derartiger Stabilisatoranordnungen erhöht. Gleichzeitig wird eine hohe Prozesssicherheit das Einbringen der Vorspannung in das Gummilager betreffend erzielt. Zudem ist dieses Verfahren sowohl für passive als auch für aktive Stabilisatoren einsetzbar.

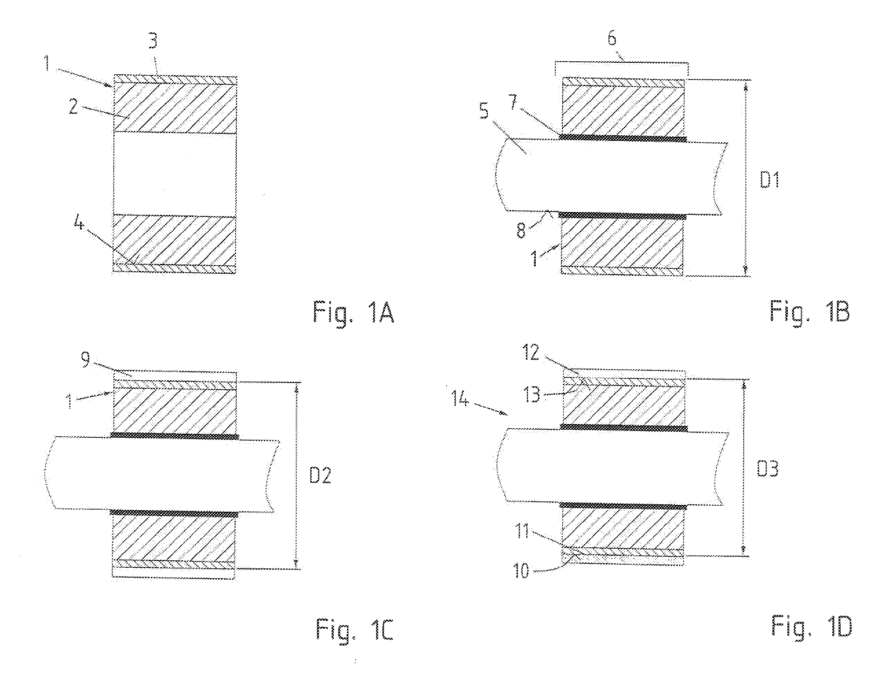

Die Erfindung wird nachfolgend anhand eines schematischen Ausführungsbeispiels näher beschrieben. Die Figuren 1A bis 1D zeigen Verfahrensschritte zum Herstellen einer Stabilisatoranordnung.
Figur 1A zeigt ein Gummilager 1 bestehend aus einem Gummiformteil 2 und einer Außenschale 3 im Querschnitt. Das Gummilager 1 ist hierbei einstückig ausgeführt und wird durch Anvulkanisieren des Gummiformteils 2 an eine Innenseite 4 der Außenschale 3 hergestellt.
Figur 1B zeigt einen Stabilisatorstab 5 mit einem darauf angeordneten Gummilager 1. Im Verbindungsbereich 6 zwischen Gummilager 1 und Stabilisatorstab 5 ist vor der Montage des Gummilagers 1 ein Haftvermittler 7 in Form einer Beschichtung vorzugsweise auf eine Umfangsseite 8 des Stabilisatorstabs 5 aufgebracht worden.

In Figur 1B wird das Gummilager 1 durch ein Vorspannwerkzeug 9 mit einer definierten Vorspannung gehalten. Diese Vorspannung baut sich während des Vulkanisationsprozesses zumindest teilweise ab. Der Durchmesser D2 ist gegenüber dem unkomprimierten Zustand der Figuren 1A bis 1B reduziert. Diese Anordnung wird sodann in einem Ofen oder mittels einer Induktionsheizung erwärmt, sodass das Gummilager 1 über den Haftvermittler 7 auf den Stabilisatorstab 5 aufvulkanisiert und somit stoffschlüssig mit diesem verbunden wird.

Nach dem Aufvulkanisieren wird das Vorspannwerkzeug 9 vom Gummilager 1 entfernt und das Gummilager 1 an seiner Außenseite 10 mit einer Klebeschicht 11 versehen. Anschließend wird wie in Figur 1 D abgebildet, das Gummilager 1 umfassend eine Lagerschelle 12 angeordnet, wobei gleichzeitig mit Anordnung der Lagerschelle 12 eine definierte Vorspannung in das Gummilager 1 eingebracht wird.

Aufgrund des beim Aufvulkanisieren auftretenden Schrumpfes des Gummilagers 1 verringert sich der Durchmesser D2 durch das Einbringen der definierten Vorspannung mittels der Lagerschelle 12 nochmals auf einen Durchmesser D3. Durch die Klebeschicht 11 wird eine stoffschlüssige Verbindung zwischen der Außenseite 10 des Gummilagers 1 und einer Innenseite 13 der Lagerschelle 12 erzielt. Dadurch ist die Stabilisatoranordnung 14 zusätzlich gegen Relativbewegungen zwischen Lagerschelle 12 und Gummilager 1 gesichert.

### Bezugszeichen:

- 1 -: Gummilagers
- 2 -: Gummiformteil
- 3 -: Außenschelle
- 4-: Innenfläche
- 5 -: Stabilisatorstab
- 6-: Verbindungsbereich
- 7 -: Haftvermittler
- 8 -: Außenseite v. 5
- 9 -: Vorspannwerkzeug
- 10-: Außenseite v. 1
- 11 -: Klebeschicht
- 12-: Lagerschelle
- 13-: Innenseite v. 12
- 14 -: Stabilisatoranordnung

- D1 -: Durchmesser
- D2 -: Durchmesser
- D3 -: Durchmesser

## Patentansprüche

1. Verfahren zum Herstellen einer Stabilisatoranordnung (14) umfassend einen Stabilisatorstab (5) mit einem von einer Lagerschelle (12) umgriffenen Gummilager (1), bei welchem das Gummilager (1) in einem ersten Schritt durch Aufvulkanisieren des Gummiformteils (2) auf eine Innenseite (4) einer Außenschale (3) hergestellt wird und nach Beschichtung des Stabilisatorstabs (5) in einem Verbindungsbereich (6) auf den Stabilisatorstab (5) aufvulkanisiert wird, wobei das Gummilager (1) während des Aufvulkanisierens auf den Stabilisatorstab (5) mittels eines Vorspannwerkzeug (9) unter einer definierten Vorspannung gehalten wird und nach dem Aufvulkanisieren unter Einbringung einer definierten Vorspannung mit der Lagerschelle (12) verbunden wird.

2. Verfahren nach Anspruch 1, **dadurch gekennzeichnet, dass** das Aufvulkanisieren des Gummilagers (1) auf einen Stabilisatorstab (5) in einem Ofen oder mittels einer Induktionsheizung erfolgt.

3. Verfahren nach Anspruch 1, **dadurch gekennzeichnet, dass** das Gummilager (1) stoffschlüssig mit der Lagerschelle (12) verbunden wird,

4. Verfahren nach Anspruch 1 oder 2, **dadurch gekennzeichnet, dass** die Lagerschelle (12) durch Kleben mit dem Gummilager (1) verbunden wird.

5. Stabilisatoranordnung umfassend wenigstens ein auf einen Stabilisatorstab (5) aufvulkanisisertes Gummilager (1) mit einer das Gummilager (1) umgreifenden Lagerschelle (12), **dadurch gekennzeichnet, dass** das Gummilager (1) aus einem Gummiformteil (2) mit einer aufvulkanisierten Außenschale (3) besteht und durch die Lagerschelle (12) unter einer definierten Vorspannung gehalten wird.

6. Stabilisatoranordnurig nach Anspruch 5, **dadurch gekennzeichnet, dass** das Gummilager (1) stoffschlüssig mit der Lagerschelle (12) verbunden ist

7. Stabilisatoranordnung nach Anspruch 5 oder 6, **dadurch gekennzeichnet, dass** das Gummilager (1) durch Kleben mit der Lagerschelle (12) verbunden ist.

8. Stabilisatoranordnung nach einem der Ansprüche 5 bis 7, **dadurch gekennzeichnet, dass** die Außenschale (3) aus Metall oder Kunststoff besteht.

9. Stabilisatoranordnung nach einem der Ansprüche 5 bis 8, **dadurch gekennzeichnet, dass** die Außenschale (3) an ihrer Außenseite eine Gummibeschichtung aufweist.

10. Stabilisatoranordnung nach einem der Ansprüche 5 bis 9, **dadurch gekennzeichnet, dass** das Gummilager (1) aus Gummilagerhälften besteht.
